(19) **Europäisches Patentamt**

**European Patent Office**

**Office européen des brevets**

(11) **EP 1 094 899 B1**

(12) **EUROPEAN PATENT SPECIFICATION**

(45) Date of publication and mention
of the grant of the patent:
**05.03.2003 Bulletin 2003/10**

(51) Int Cl.⁷: **B01J 39/18**, B01J 39/04

(21) Application number: **99931714.2**

(86) International application number:
**PCT/SE99/01082**

(22) Date of filing: **16.06.1999**

(87) International publication number:
**WO 99/065607 (23.12.1999 Gazette 1999/51)**

(54) **METHOD FOR SEPARATION ON CATION EXCHANGERS**

VERFAHREN ZUR TRENNUNG AN KATIONENAUSTAUSCHERN

PROCEDE DE SEPARATION SUR ECHANGEURS CATIONIQUES

(84) Designated Contracting States:
**AT BE CH DE DK ES FI FR GB IE IT LI LU NL SE**

(30) Priority: **18.06.1998 SE 9802214**

(43) Date of publication of application:
**02.05.2001 Bulletin 2001/18**

(73) Proprietor: **Amersham Biosciences AB**
**751 84 Uppsala (SE)**

(72) Inventors:
• **BERGLUND, Rolf**
  **S-754 49 Uppsala (SE)**
• **BERGSTRÖM, Jan**
  **S-740 22 Bälinge (SE)**
• **SÖDERBERG, Lennart**
  **S-755 98 Uppsala (SE)**

(74) Representative: **Rollins, Anthony John et al**
**Amersham plc**
**Amersham Place**
**Little Chalfont, Bucks. HP7 9NA (GB)**

(56) References cited:
**EP-A1- 0 326 233     WO-A1-97/29825**

• **SAUNDERS COLLEGE PUBLISHING, 1992,
  DOUGLAS A. SKOOG et al, "Principles of
  Instrumental Analysis", pages 654-658
  XP002921030**
• **JOURNAL OF CHROMATOGRAPHY AYA
  OHKUBO ET AL: 'Synthesis and
  Characterization of a Strong Cation Exchanger
  Based on Polymer-Coated Silica for
  High-Performance Liquid Chromatography' vol.
  779, no. 1-2, 29 August 1997, THE
  NETHERLANDS, pages 113 - 122, XP004090632**

## Description

### Technical field

The present invention relates to a kind of cation exchangers for which we have discovered new properties. In the invention the new properties is utilized for the separation of complex mixtures of compounds by adsorption/ binding of one or more compounds of the mixtures to the cation exchanger. Compounds of interest are typically positively charged. They often have a complex structure, for instance by being a protein.

Some of the cation exchangers as such are novel.

### Background of the invention

The expression "separation" in the context of the instant invention means removal or separation of one or more compounds from a mixture of dissolved substances. Separation may be utilized in connection with isolation, purification, concentration, analysis etc of the compounds in question. Separation by cation exchange on a cation exchanger occurs because the compounds of an applied mixture interact differently with the cation exchanger. The interaction may vary from no interaction to very strong interaction.

The term "protein" comprises compounds containing peptide bonds between amino acids. In other words the term comprises oligopeptides and polypeptides as well as lipoproteins, glycoproteins, proteoglycans, etc.

The terms "adsorb" and "bound" to a cation exchanger include that the compound is retarded when allowed to pass through the cation exchanger.

An ion exchanger consists of an insoluble and a more or less swellable matrix, to which charged groups (ligands) have been covalently bound. The counterions of these charged groups may be exchanged for other ions of the same type of charge.

Ion exchangers with negatively charged groups (ligands) have positively charged counter-ions (cations) and are therefore called cation exchangers. Presence of negatively charged groups (ligands) is a fundamental feature of cation exchangers. The kind and the amount of ligand determine the affinity and selectivity of the ion exchanger for a positively charged compound. The capacity is predominantly determined by the total number of groups and their availability. The most common cation exchanging groups are sulphonate ($-SO_3^-$ /$-SO_3H$), carboxylate ($-COO^-$/$-COOH$), phosphate ($-O-PO_3^{2-}$/$-O-PO_3H^-$/$-O-PO_3H_2$)) and phosphonate ($-PO_3^{2-}$/$-PO_3H^-$/$-PO_3H_2$). The groups are usually bound via a spacer to the matrix (the free bond means binding to saturated or unsaturated carbon atom in a spacer or in a base matrix).

Cation exchangers in which the negatively charged group is sulphonate are usually classified as strong cation exchangers. The other cation exchangers are called weak cation exchangers (carboxylate, phosphate or phosphonate groups). Strong cation exchangers are completely ionized within a broad pH range, usually pH > 2. For weak cation exchangers the capacity of ion exchange and the degree of ionization vary with pH (usually within the interval pH 2-12).

The matrix may be based on inorganic compounds, synthetic resins, polysaccharides, etc. Different matrices may have different physical properties. Porosity, mechanical strength, rigidity, flow characteristics, swelling properties, the degree of non-specific adsorption, etc of the matrices may vary.

For separation of substances on cation exchangers the following applies:

a) If the conditions are selected in such a way that undesired substances in the sample are bound to the cation exchanger and the substance of interest is passed through, there is no need for a separate desorption/elution of the substance of interest. Re-use of the cation exchanger may require regeneration.

b) If the conditions are selected in such a way that the substance of interest is bound to the cation exchanger, desorption/elution is required to release the substance from the cation exchanger. In this case the substance is recovered by the desorption step.

Separation using cation exchangers may be achieved by:

(a) Batchwise processes, e.g. by having the cation exchanger dispersed in i a liquid containing the substance to be adsorbed/bound,
(b) Column processes (e.g. ion exchange chromatography) in which the cation exchanger is in form of a monolithic bed or in form of particles that define an expanded/fluidised bed or a packed bed. A liquid containing the substance (s) to be adsorbed/bound is allowed to pass through the bed, and
(c) Membrane processes etc.

Separation by cation exchange to purify a substance is often combined with other techniques distinguishing compounds based on differences in size and form (gel filtration), in biospecific affinity (bioaffinity chromatography), in ability for hydrophobic interaction etc.

Purification of a compound is usually initiated by extraction. The resultant crude extract typically has a large volume and such a high ionic strength that it is not possible to adsorb on conventional ion exchangers without dilution, which further will increase the volume (conventional cation exchangers don't have sufficient adsorption ability at a high ionic strength). Large volumes will thus have to be handled and therefore relevant investments must be made in space demanding and expensive equipment and also use of highly purified water.

**Related Art**

Dipolar adsorbents prepared by coupling of sulphanilic acid using epichlorohydrin has been described (ligand + spacer = $-CH_2CHOHCH_2N^+H_2C_6H_4SO_3^-$) (Porat et al., J. Chromatog. 51 (1970) 479-489; and Ohkubo et al., J. Chromatog. A, 779 (1997), 113-122). These two articles do not disclose the new features discovered by us. The articles do not disclose a method in which the ligand is negatively charged and the target substance to be removed is positively charged.

2,4,6-trihalo-1,3,5-triazine has been utilized to bind different compounds RHNR'X to carriers inter alia to cellulose. R has been hydrogen, aryl or alkyl, R' alkylene or arylene and X carboxy, sulphonyl, phosphate, phosphonate, boronate, etc. (See Behrend et al., WPI Abstract Accession No. 86-312313 (= DD-A-237844). This coupling methodology gives structures that are unstable to hydrolysis.

EP 326233 discloses a cation exchanger in which there is a hydrophobic base matrix to which cation exchanging groups are attached. The hydrophobicity of this type of cation exchangers makes them unsuitable for separation of biomolecules such as proteins.

An anion exchanger with improved properties relative to previously known anion exchangers has recently been described in WO-A-9729825. The cation exchangers used in the instant invention are a particularly interesting complement to the anion exchangers according to WO-A-9729825. The ion exchanging ligands of the instant invention and in WO-A-9729825 are complex in different ways reflecting the complexity of protein interactions.

The article by Skoog et al in Principles of Instrumental Analysis, 4th ed., Chapter 26F, (1992) 654-658 discloses various principles for constructing and using ion exchangers.

WO 9808603 discloses separation media of the general structure M-SP1-L in which M is a base matrix, SP1 is a spacer and L is a ligand comprising a mono- or bicyclic aromatic or heteroaromatic moiety that may substituted. In one variant L is X-A-SUB where X is -O-, -S- or -NH- and A the aromatic or heteroaromatic moiety that is substituted. The substituent on A may be an acidic group. The separation media are suggested for the isolation of proteins, in particular immunoglobulins. The publication does not disclose the properties we have discovered and contains no disclosure of a separation method utilizing these properties.

US 5,652,348 discloses ion exchange resins in which the hydrophobicity/hydrophilicity of the resin including the ligand is changed upon change in pH. The hydrophobicity may be increased by the introduction of hydrophobic non-ionizable ligands. Adsorption/desorption is controlled by altering the hydrophobicity/hydrophilicity of the matrix including ligand.

**Objects of the invention**

The objects of the invention are to achieve

a) adsorption/binding of positively charged compounds, such as proteins, to cation exchangers at higher ionic strengths, and
b) elution/desorption of the adsorbed/bound compound at higher ionic strengths and/or within a broader ionic strength interval.

The comparison is relative what is normal in the field. A subobject is to reduce the need for extensive dilutions when samples of high ionic strength are to be applied to cation exchangers.

**Detailed description of the invention**

The instant invention is based on our discovery that cation exchangers carrying ligands of a certain kind of structure may exhibit unexpected strong interactions with positively charged compounds of complex structure, for instance macromolecules such as proteins and many other biomolecules. This is reflected in our finding that this kind of cation exchangers often require an abnormally high ionic strength for elution of adsorbed proteins.

The use of these cation exchangers in separations provides improvements and is an important aspect of the instant invention.

The cation exchangers concerned comprise a base matrix, preferably a polymer matrix, with one or more cation exchanging ligands covalently bound to the base matrix. The cation exchanger is characterized by formula (I):

$$M\text{-}A\text{-}X\text{-}Y(\text{-}Z)_n \hspace{4cm} [I]$$

wherein

a) $X\text{-}Y(\text{-}Z)_n$ is the ligand (which shall capable of having a negatively net charge (anionic) when the adsorption is taking place according to the invention).

b) n is an integer $\geq 1$, typically 1, 2 or 3. For n = 2 or more, Z may be different in one and the same ligand.

c) M is the matrix and contains additional charged ligands, which may be the same as or different from $\text{-}A\text{-}X\text{-}Y(\text{-}Z)_n$. The matrix may also contain other positively charged ligands and/or other negatively charged ligands.

d) A is a spacer and is selected according to the general guidelines for covalently binding of ligands, intended for cation exchange, to matrices. See below.

e) X is $\text{-}O\text{-}$, $\text{-}S(R_1)\text{-}$ or $\text{-}N(R_1)(R_2)\text{-}$. $R_1$ and $R_2$ are H, a free electron pair, $A\text{-}X\text{-}Y(\text{-}Z)_n$, $Y(\text{-}Z)n$ or a straight, cyclic or branched aliphatic $C_1\text{-}C_6$ group. $R_1$ and $R_2$ are preferably saturated groups (alkyl) which for $C_{2\text{-}6}$ alkyl may have 1 to 4 of its hydrogen atoms replaced by OH groups or lower alkoxy. At most one of $R_1$ and $R_2$ can be a free electron pair. On the sulphur atom there may be one or two groups $A\text{-}X\text{-}Y(\text{-}Z)_n$ or $Y(\text{-}Z)_n$ and on the nitrogen atom one, two or three groups $A\text{-}X\text{-}Y(\text{-}Z)_n$ or $Y(\text{-}Z)_n$.

f) Y may be:

1) a 5- or 6-membered cyclic structure containing double bonds, preferably an aromatic group, or

2) an alicyclic $C_5\text{-}C_6$ group or an aliphatic, straight or branched, preferably saturated, $C_1\text{-}C_8$ group with at least 1 or 2 carbon atoms in the chain joining X with Z, with the proviso that X is not $\text{-}O\text{-}$ or $\text{-}S\text{-}$.

g) Z is a cation exchanging group, preferably selected among the negatively charged groups mentioned above (for instance carboxylate, sulphonate, sul phate, phosphonate, phosphate sulphate).

Cyclopentyl and cyclohexyl are the most important alicyclic groups that can be used as Y.

Depending on the number of carbon atoms, alicyclic, aliphatic and aromatic structures may be substituted by 1, 2, 3, 4, 5 or 6 OR groups. RO is OH or lower alkoxy or any other alkoxy group not disturbing the advantageous properties utilized in the invention.

Chains in aliphatic groups (Y as well as R, $R_1$ and $R_2$) may be interrupted by a thioether sulphur or an ether oxygen ($\text{-}S\text{-}$ and $\text{-}O\text{-}$, respectively), e.g. in one or two positions. In the aliphatic groups referred to (Y, R, $R_1$ and $R_2$) only one atom selected among sulphur, oxygen and nitrogen should bind to one and the same carbon atom.

By lower alkoxy and lower alkyl are meant $C_{1\text{-}10}$, preferably $C_{1\text{-}6}$ alk-oxy/alkyl.

**Advantageous embodiments of the cation exchanger**

Advantageous ligands ($\text{-}X\text{-}Y(\text{-}Z)_n$) have X equal to $\text{-}O\text{-}$ or $\text{-}N(R_1)(R_2)\text{-}$ with at least one of $R_1$ and $R_2$ being equal to a free electron pair or H while the other of $R_1$ and $R_2$ is H or a straight, branched or cyclic aliphatic group according to above, for instance alkyl.

Advantageous variants with X = $\text{-}N(R_1)(R_2)\text{-}$ may arise if there is/are 1-4, such as 1-3, lower alkoxy groups or OH (= R'O) at a distance of 2 or 3 carbon atoms from the nitrogen atom in $\text{-}N(R_1)(R_2)\text{-}$. These R'O groups can be placed in Y, in Ri or $R_2$ or in the spacer A. R'O is preferably OH. Particularly advantageous variants ($\text{-}X\text{-}Y(Z)_n$) arise if one of $R_1$ and $R_2$ is a free electron pair or H, such as in a ligand in which X = $\text{-}N[C(CH_2OH)_3]\text{-}$, Y = $\text{-}CH_2CH_2CH_2\text{-}$ or $\text{-}CH_2CHOHCH_2\text{-}$, n is 1, and Z is $\text{-}SO_3\text{-}$.

Another group of advantageous ligands are those in which Y equals an aromatic group, typically a benzene ring (substituted or unsubstituted phenylene). X and Y may in this case be ortho, meta or para to each other. Especially important variants are ligands derived from hydroxybenzoic acid, sulphosalicylic acid or hydroquinone sulphonate, particularly if coupling to the spacer has occurred via any of the ring bound hydroxy groups of the compounds.

If Y is an aliphatic group it is preferably a $C_2\text{-}C_8$ group, such as a $C_2\text{-}C_6$ group, preferably a $C_2\text{-}C_4$ group, which groups may be substituted by OR groups according to above. In case Y equals a $C_1$ group a preferred embodiment is X = $\text{-}N(R_1)(R_2)\text{-}$, where one of $R_1$ or $R_2$ is a free electron pair or hydrogen and the other is an alkyl according to above with 1, 2 or 3 OR at a distance of two carbon atoms from N with RO being as defined above.

The cation exchangers to be used in the invention exhibit a higher, preferably more than 25% higher, such as more than 40% and even more than 100% higher maximum elution ionic strength in the pH interval 2-12 for one or more proteins selected among ribonclease, chymotrypsinogen A, cytochrome C, lysozyme, wheat-germ lectin and β-lactoglobulin, compared with the maximum elution ion strength required for the same proteins on a reference ion exchanger where the ion exchanging group is sulphonate ($-SO_3^-$) and the base matrix, the spacer and the degree of substitution are the same but where the groups X and Y are absent.

The most important aspect of the present invention is a process for separation of positively charged compounds from a solutions according to claim 1. The process comprises that the solution is contacted with a cation exchanger to bind one or more of the positively charged compounds to the cation exchanger, and also, if desired, to elute/desorb bound compounds. The compounds concerned are primarily biomolecules and particularly amphoteric ones, such as proteins.

The characterizing features of the process is (a) that the cation exchanger is according to Formula (I) and have higher maximum elution ionic strength in relation to a reference sulphonate cation exchanger in the same manner as desrcribed above, and (b) that the binding between the cation exchanger and a positively charged compound is allowed to occur at a pH value within the interval 2-14 where a significant part of the ligands ($-X-Y(-Z)_n$) have a negative net charge, preferentially all of them. For ligands in which n = 2 or more, it might be preferred to run the adsorption step at a pH where the ligands have a negative net charge but not the maximal net charge (n = 2 or more).

The selection of this kind of cation exchangers means that the binding often may occur at a higher ionic strength than the elution ionic strength required when eluting the compound at the same pH value from a reference ion exchanger according to above. The comparison is made with pH and other conditions being the same.

The cation exchanger of the invention may be selected so that the ionic strength, when binding occurs, may be at least 25% higher, such as at least 40% higher than when using the corresponding reference ion exchanger according to above (as measured at the same pH). If required binding may also be performed at more than 100% higher ionic strength than when using the corresponding reference ion exchanger according to above (as measured at the same pH ).

In absolute figures this may involve the binding being performed at an ionic strength exceeding 15 or 20 mS/cm, such as exceeding 30 mS/cm and in some cases exceeding 40 mS/cm. The applicable figures in a particular case will depend on the selection of ligand and compound to be eluted.

An interesting application of this embodiment of the invention is large-scale processes in which large volumes of a crude product having a high ionic strength are to be applied on the cation exchanger. In general, diluting is required in order to enable binding of the compound of interest to the conventional ion exchanger. By use of the process of the invention the need of diluting is often reduced.

The elution step in the process of the invention, may, for amphoteric compounds and other compounds that may be positively charged, such as proteins, primarily be performed according to four main alternatives

　　(a) Changing pH (rising or lowering) in the elution liquid,
　　(b) Increasing the ionic strength or
　　(c) Combining a change of pH and ionic strength, or
　　(d) Including a ligand analogue in the liquid used for eluting.

In principle any condition/methodology alone or in combination that neutralizes the interaction causing binding may be utilized for desorption.

In altenative c) the change of ionic strength may be downwards or upwards depending on the effect the pH change has on the interactions causing binding.

In alternative (d) the ligand analogue may be combined with any one of alternatives a-c.
The most advantageous alternatives typically neutralize the interaction causing binding without requiring an increase in the ionic strength. In this way the eluate will contain the released substance and will have a lowered salt concentration compared to the sample originally applied. The requirements of desalting may thus be reduced. From this perspective, elution by changing the pH of the eluting liquid (alternatives a) combined with a lowering of ionic strength is particularly preferred among alternatives (a)-(c). The alternative with a ligand analogue may give similar advantages.

If elution/desorption does not involve a change in pH, elution/desorption of the ion exchanger usually has to be performed at an ionic strength which is higher than the corresponding elution ionic strength required for a corresponding reference ion exchanger according to above (as measured at the same pH). The ionic strength in this step may thus be at least 25% higher such as at least 40% higher than for the reference cation exchanger. In some extreme cases an ionic strength may be required that is more than 100% higher than for the corresponding reference ion exchanger (as measured at the same pH).

Another preferred embodiment involves selecting the cation exchanger according to Formula I so that elution can be performed by use of such a ionic strength gradient that the elution interval becomes broader than the interval required at the same pH value for the reference ion exchanger according to above. This will normally be accomplished by selecting the cation exchanger of formula I according to the preferred modes described above. The interval referred to may start at the lowest ionic strength applied for elution and ends at the ionic strength at the maximal peak height for a compound of interest. In the alternative the interval may be the interval defined by elution ionic strength for peak maximum for two different compounds appearing during elution. This means greater possibilities to separate compounds, which are related to each other with reference to charge, and/or to improve yield of these compounds. In a preferred embodiment the elution interval, within which the current compound(s) is eluted, is at least 20%, preferably at least 40%, broader than the corresponding ionic strength interval with the reference ion exchanger according to above (as measured, at in other respects, the same conditions). In many cases the ionic strength interval may be further broadened and become at least 50%, at least 75% or at least 100% broader than the corresponding ionic strength interval with the reference ion exchanger according to above (as measured, at in other respects, the same conditions).

Considering the whole interval, within which the current compounds can be eluted, usually an interval with a range of up to approximately 10 mS/cm or somewhat wider has previously been utilized. According to the present invention the interval can be expanded to a range of at least 15, preferably at least 20 or even more preferably at least 30 mS/cm by adjusting the choice of the cation exchanger defined by Formula I. The applicable figures in a particular case is dependent on the ligand and the compound(s) to be separated.

The change in ionic strength and/or pH may be done as a stepwise gradient (containing one, two or more steps) or as a continuous gradient. The application of stepwise or continuous gradients is also applicable to other changes in conditions that are used to neutralize the binding of the compound(s) of interest to the ligand.

Furthermore, the different process aspects can be utilized in any suitable combination.

Other preferred embodiments of the different process aspects of the invention are defined by the preferred embodiments of the cation exchanger.

The base matrix in the cation exchangers according to the invention is preferably hydrophilic and in the form of a polymer, which is insoluble and more or less swellable in water. Hydrophobic polymers that have been derivatized to become hydrophilic are included in this definition. Suitable polymers are polyhydroxy polymers, e.g. based on polysaccharides, such as agarose, dextran, cellulose, starch, pullulan, etc. and completely synthetic polymers, such as polyacrylic amide, polymethacrylic amide, poly(hydroxyalkylvinyl ethers), poly(hydroxyalkylacrylates) and polymethacrylates (e.g. polyglycidylmethacrylate), polyvinylalcohols and polymers based on styrenes and divinvlbenzenes, and copolymers in which two or more of the monomers corresponding to the above-mentioned polymers are included. Polymers, which are soluble in water, may be derivatized to become insoluble, e.g. by cross-linking and by coupling to an insoluble body via adsorption or covalent binding. Hydrophilic groups can be introduced on hydrophobic polymers (e.g. on copolymers of monovinyl and divinylbenzene) by polymerization of monomers exhibiting groups which can be converted to OH, or by hydrophilization of the final polymer, e.g. by adsorption of suitable compounds, such as hydrophilic polymers.

The matrix can also be based on inorganic material, such as silica. Preferred matrices lack hydrolytically unstable groups, such as silan, ester and amide groups.

The matrix is often porous.

The term "hydrophilic matrix" in practice means that the accessible surface of the matrix is hydrophilic in the sense that is penetrated by aqueous liquids. Typically the accessible surfaces on a hydrophilic base matrix expose a plurality of polar groups for instance comprising oxygen and/or nitrogen atoms. Examples of such polar groups are hydroxy, amino, carboxy, ester, ether of lower alkyls (such as $(-CH_2CH_2O-)_nH$ where n is an integer).

For covalent coupling of the ion exchange ligands of the invention to a matrix, traditional coupling chemistry may be used including also techniques to be developed in the future. This means that the spacer A, joining the ion exchange ligand $-X-Y(-Z)_n$ with the matrix M in the cation exchanger, may be of the same type as in traditional ion exchangers. The demands for hydrolytic stability require that spacers should be built of groups that are stable against hydrolysis. They may for instance contain groups selected among straight, branched, cyclic saturated and unsaturated and aromatic hydrocarbon groups (e.g. with up to 1-10 carbon atoms), ether groups (-O- thioether (-S-) amide (-CONH-) and other groups with corresponding or acceptable hydrolytic stability. Typically the spacer binds to X via a $sp^3$-hybridized or aromatic carbon atom.

Examples of common structure elements, which alone or in combination with each other or with other structures may work as spacers are:

$-O-CH_2-$;  $-O-CH_2-CHOH-CH_2-$;  $-O-CH_2-CH_2-CH_2-$;  $-O-CH_2-CH(CH_3)-$;  $-S-CH_2-$;  $-CO-NH-CH_2$; and  $-NH-CO-CH_2-$; $-O-CH_2-CHOH-CH_2-O-CH_2-CH_2-CH_2-CH_2-O-CH_2-CHOH-CH_2-$;  $-O-CH_2-CHOH-CH_2-O-CH_2-CHOH-CH_2-$  (= the spacer in the sulphonate reference ion exchanger of the patent examples).

Typical stable spacers have only one atom selected from oxygen, sulphur and nitrogen bound to the same carbon atom.

The level of ligands in the cation exchangers used in the invention is usually selected in the interval of 0.001-4 mmoles/ml, preferably 0.01-1 mmole/ml matrix swollen with water. Possible and preferred ranges are determined by the structure of the matrix. Thus, the level of ligand is usually within the range of 0.1-0.3 mmole/ml swelled matrix (gel) for agarose based matrices. For dextran based matrices the interval in question may be extended up to 0.5-0.6 mmole/ml swelled matrix (gel).

The invention will now be further illustrated by a number of non-limiting examples.

## EXPERIMENTAL PART

## I. THE SYNTHESIS OF ION EXCHANGERS.

**Allylation, standard method for production of allyl hydroxypropyl Sepharose HP (ion exchanger according to the invention):**

Cross-linked agarose (30 μm particles) produced by a reaction between epichlorohydrin and agarose in the presence of NaOH (Porath et al., (J. Chromatog. 60 (1971) 167-77 and US 3,959,251) was reacted with allylglycidylether with NaOH as a base to an allyl level ($CH_2=CHCH_2OCH_2CHOHCH_2-$) of 0.03-0.30 mmole/ml).

**A. Synthesis of four variants of reference S-ion exchangers (ligand sulphonate).**

Starting from cross-linked allylated agarose according to above (allyl group levels of 0.033, 0.111, and 0.200 mmole/ml) three different S Sepharose ion exchangers were produced with ion exchange capacities of 0.031, 0.094 and 0.140 mmole/ml. 25 g of cross-linked allylated agarose was washed with water and loaded together with 30 ml of distilled water and 1.8 g of sodium acetate in a 100 ml beaker provided with a hanging magnetic stirrer, and then bromine water was added to remaining yellow colour. The gel was washed on a glass filter with distilled water (> 5 bed volumes), and was suctioned dried for 15-30 seconds. Then the brominated gel was loaded together with 30 ml of distilled water and 8 g of sodium sulphite into a three-necked 100 ml Bellco flask with a hanging magnetic stirrer. PH was adjusted to about 10-11. The reaction was proceeded over night (23 hours) at 50°C.

The reaction mixture was neutralized with acetic acid. The gel was then washed with distilled water (> 10 bed volumes) and for possible storage distilled water containing 23% (w/w) ethanol was used.

To obtain a S-ion exchanger with an ion exchange capacity of 0.220 mmole/ml the ion exchanger with a capacity of 0.140 mmole/ml was allylated once more (to an allyl level of 0.30 mmole/ml) with subsequent sulphite coupling according to above,

**B. Production of a phosphate ion exchanger.**

20 g of cross-linked allylated agarose according to A above was washed with water and loaded together with 80 - 100 ml of distilled water and 4.6 g of sodium acetate into a 100 ml Bellco flask provided with a hanging magnetic stirrer. Bromine water was then added to a remaining yellow colour. The gel was washed in a glass funnel with distilled water (> 5 bed volumes). The gel was suctioned dried for 15-30 seconds.

The gel was suctioned dried and loaded together with 30 ml of distilled water, 43.1 g (0.2476 mole) of dipotassium hydrogen phosphate and 9.90 g of sodium hydroxide into a three-necked 25 ml Bellco flask with a hanging magnetic stirrer. The reaction was proceeded over night 16-22 hours at 40°C. The reaction was stopped by lowering the pH to 7.0 with conc. HCl and then the gel was washed on a glass filter with distilled water (> 10 bed volumes).

Inflection point titration under conditions of equilibrium directly on the substituted matrix with NaOH solution gave a level of ligand of 0.04 mmole/g of dry aspirated gel.

**C. Synthesis of a cation exchanger based on hydroxybenzoic acid.**

10 g of cross-linked allylated agarose according to A above (level of allyl groups of 0.21 mmole/ml gel) was washed with water and loaded into a 100 ml Bellco flask provided with a hanging magnetic stirrer together with 80-100 ml of distilled water and 2.3 g of sodium sulphate as a buffer. Finally, bromine water was added to a remaining yellow colour. Washing was performed with distilled water (> 5 bed volumes).

The gel was suctioned dried for 15-30 seconds, washed with distilled water and then loaded into a solution of 15.36 g (0.112 mole) of 4-hydroxybenzoic acid and 14.68 g (» 0.2224 mole) of potassium hydroxide in 20 ml of distilled water. First lye and water were mixed. The reaction was run in a three-necked 25 ml Bellco flask with a hanging magnetic stirrer bar. The reaction was proceeded over night, 16-22 hours at 40°C.

The reaction was stopped by taking up the gel on a glass filter funnel and washed with a few bed volumes distilled water and then the gel was suspended in distilled water and the pH value was adjusted with acetic acid to about 6.

Then the gel was washed with distilled water (> 10 bed volumes). For possible storage distilled water containing 23% (w/w) ethanol was used.

Inflection point titration under conditions of equilibrium directly on the substituted matrix with NaOH solution gave a level of ligand of 0.11 mmole/g dry aspirated gel.

**D. Synthesis of a cation exchanger based on sulphanilic acid.**

10 g of water washed cross-linked allylated agarose according to A above (allyl group level of 0.21 mmole/ml gel) was loaded into a 100 ml Bellco flask provided with a hanging magnetic stirrer together with 80-100 ml of distilled water and 2.3 g of sodium sulphate as a buffer. Bromine water was thereafter added to a remaining yellow colour. Washing was performed with distilled water (> 5 bed volumes).

The gel was suctioned dried for 15-30 seconds and then loaded into a solution of 19.26 g (0.112 mole) of 4-sulphanilic acid and 7.34 g (» 0.1112 mole) of potassium hydroxide (>85%) in 20 ml of distilled water. First lye and water were mixed. The reaction was run in a three-necked 25 ml Bellco flask with a hanging magnetic stirrer. The reaction was performed during 16-22 hours at 40°C.

The reaction was stopped by taking up the gel on a glass filter funnel and washed with a few bed volumes of distilled water and then the gel was suspended in distilled water and the pH value was adjusted with 1 M HCl to pH about 6.

Then the gel was washed with distilled water (> 10 bed volumes). For possible storage distilled water containing 23% (w/w) ethanol was used.

A level of ligand of 0.12 mmole/ml packed gel was measured by adsorbing TRIS on gel packed in a column at pH 6, whereupon the excess was washed off and adsorbed TRIS was eluted with a sodium chloride solution. The amount of TRIS in the eluate, being equivalent to the amount of negative groups on the gel, was determined by inflectionpoint titration with sodium hydroxide.

**E. Synthesis of a cation exchanger based on sulphosalicylic acid.**

20 g of water washed cross-linked allylated agarose according to A above (allyl group level of 0.21 mmole/ml gel) was loaded into a 100 ml Bellco flask provided with a hanging magnetic stirrer together with 80-100 ml of distilled water and 4.6 g of sodium sulphate as a buffer. Bromine water was thereafter added to a remaining yellow colour. Washing was performed with distilled water (> 5 bed volumes).

The gel was suctioned dried for 15-30 seconds and then loaded into a solution of 56.54 g (0.2224 mole) of 5-sulphosalicylic acid-dihydrate and 44.04 g (0.6672 mole) of potassium hydroxide (>85%) in 40 ml of distilled water and 0.1 g of sodium borohydride. The reaction was run in a three-necked 100 ml Bellco flask with a hanging magnetic stirrer. The reaction was proceeded over night, 16-22 hours, at 40°C and under nitrogen gas.

The reaction was stopped by taking up the gel on a glass filter funnel and washed with a few bed volumes distilled water and then the gel was suspended in distilled water and the pH value was adjusted with 1 M acetic acid to 7.5.

Then the gel was washed with distilled water (> 10 bed volumes). For possible storage distilled water containing 23% (w/w) ethanol was used.

Inflection point titration directly on the substituted matrix with NaOH solution gave a level of ligand of 0.034 mmole/g dry aspirated gel (ion exchange cap. 0.068 mmole/g).

**F. Synthesis of a cation exchanger based on dihydroxybenzene sulphonic acid.**

20 g of water washed cross-linked allylated agarose according to A above (allyl group level of 0.21 mmole/ml gel) was loaded into a 100 ml Bellco flask provided with a hanging magnetic stirrer together with 80-100 ml distilled water and 4.6 g of sodium sulphate as a buffer. Bromine water was thereafter added to a remaining yellow colour. Washing was performed with distilled water (> 5 bed volumes).

The gel was suctioned dried for 15-30 seconds and then loaded into a solution of 56.54 g (0.2476 mole) of dihydroxybenzene sulphonic acid-potassium salt and 13.9 g of potassium hydroxide (> 85%) in 30 ml of distilled water and 0.1 g of sodium boron hydride. The reaction was run in a three-necked 100 ml Bellco flask with a hanging magnetic stirrer. The reaction was proceeded over night, 16-22 hours, at 40°C.

The reaction was stopped by taking up the gel on a glass filter funnel and washed with a few bed volumes of distilled water and then the gel was suspended in distilled water and the pH value was adjusted with 1 M acetic acid to pH about 6.

Then the gel was washed with distilled water (> 10 bed volumes). For possible storage distilled water containing 23% (w/w) ethanol was used.

Inflection point titration according to above, of to the gel adsorbed and then displaced TRIS, gave an ion exchange capacity of 0.10 mmole/ml packed gel.

**G. Synthesis of a TAPS-ion exchanger. Coupling of N-[tris-(hydxoxymethyl)methyl]-3-aminopropane sulphonic acid as a ligand (TAPS).**

20 g of water washed cross-linked allylated agarose according to A above (allyl group level of 0.21 mmole/ml gel) was loaded into a 100 ml Bellco flask provided with a hanging magnetic stirrer together with 80-100 ml of distilled water and 4.6 g of sodium sulphate as a buffer. Bromine water was thereafter added to a remaining yellow colour. Washing was performed with distilled water (> 5 bed volumes).

The gel was suctioned dried for 15-30 seconds and loaded together with 30 ml of distilled water, 10 g (0.25 mole) sodium hydroxide and 60.25 g (0.24765 mole) of N-[Tris(hydroxymethyl)methyl]- 3-amino-propane-sulphonic acid into a three-necked 100 ml Bellco flask with a hanging magnetic stirrer. The reaction was performed over night, 16-22 hours, at 40°C.

The reaction was stopped by lowering the pH to 7.0 with conc. HCI, and then the gel was washed with distilled water (> 10 bed volumes).

Inflection point titration under conditions of equilibrium directly on the substituted matrix with NaOH solution gave a level of ligand of 0.10±0.02 mmole/g dry aspirated gel. The pKa for the amino group was determined to about 8.4.

**II. RESULTS FROM CHROMATOGRAHY OF PROTEINS**

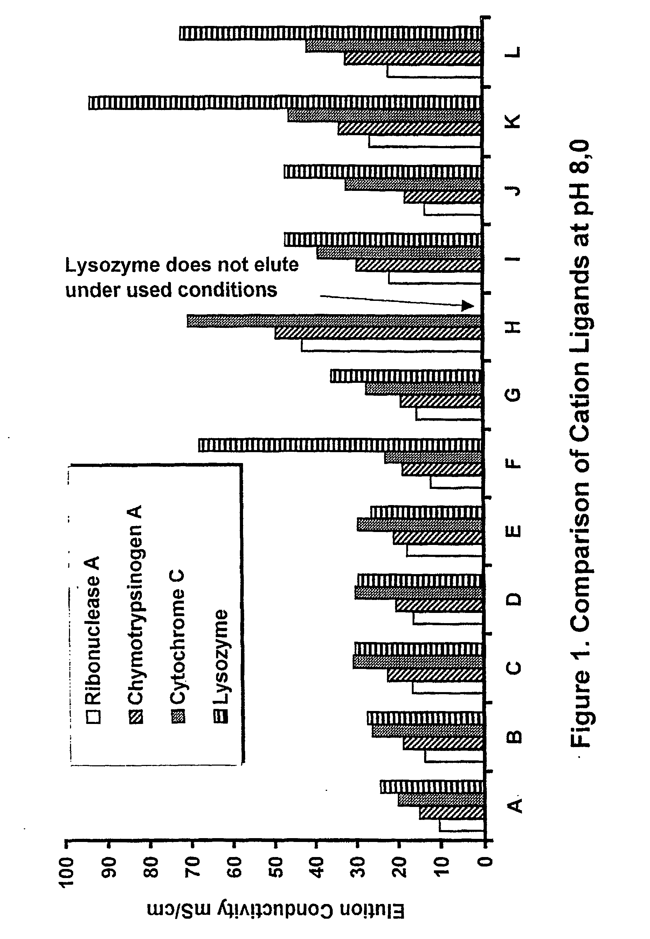

**Figure 1:** *Elution ionic strengths - comparison of different cation exchange ligands at pH 8.*

| | |
|---|---|
| A-D. | S-ligand (0.03, 0.09, 0.14 and 0.22 mmole/ml); |
| E. | Phosphate (0.04 mmole/g); |
| F. | BPR-butane-modified hydroquinone sulphonate (0.10 mmole/ml); |
| G. | Sulphopropyl-modified hydroquinone sulphonate (0.25 mmole/ml); |
| H. | Hydroquinone sulphonate (0.10 mmole/ml); |
| I. | Sulphosalicylic acid (0.034 mmole/g); |
| J. | TAPS (0.10 mmole/g); |
| K. | Sulphanilic acid (0.12 mmole/ ml); |
| L. | 4-hydroxybenzoic acid (0.11 mmole/g); |

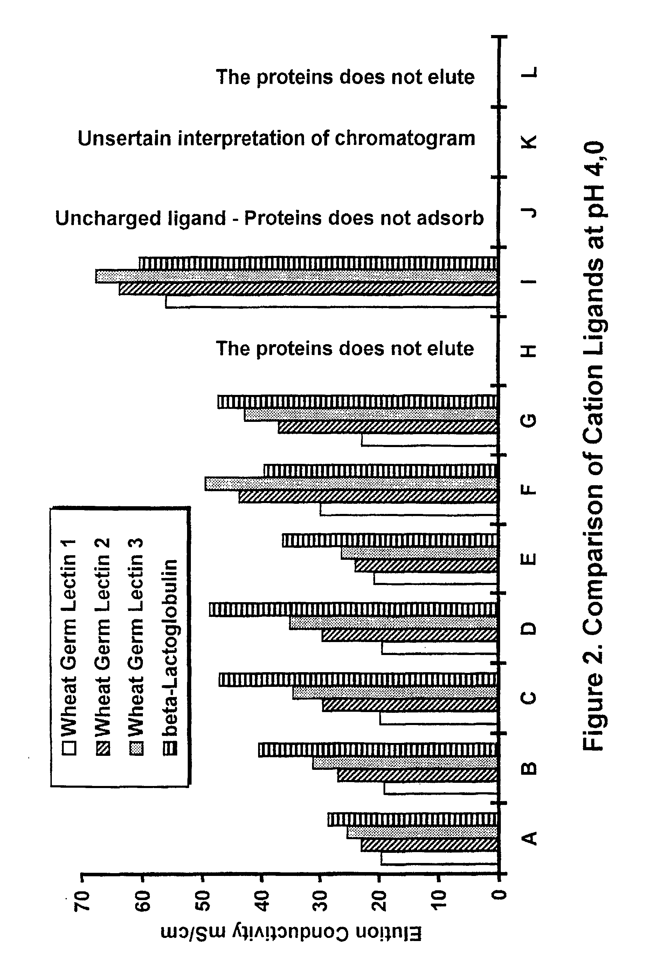

**Figure 2:** *Elution ionic strengths - comparison of different cation exchange lig*ands *at pH 4.*

| | |
|---|---|
| A-D. | S-ligand (0.03, 0.09, 0.14 and 0.22 mmole/ml); |
| E. | Phosphate (0.04 mmole/g); |
| F. | BPR-butane-modified hydroquinone sulphonate (0.10 mmole/ml); |
| G. | Sulphopropyl-modified hydroquinone sulphonate (0.25 mmole/ml); |
| H. | Hydroquinone sulphonate (0.10 mmole/ml); |
| I. | Sulphosalicylic acid (0.03 mmole/ml); |
| J. | TAPS (0.10 mmole/g); |
| K. | Sulphanilic acid (0.12 mmole/ml); |
| L. | 4-hydroxybenzoic acid (0.11 mmole/g); |

**Common to figure 1 and 2:** The level of ligand of each prepared ion exchanger is indicated in parenthesis. Weight indications (g) relate to vacuum drained gel on a glass filter funnel.

**Chromatography (proteins). Comparison of different cation exchange lig-ands coupled to cross-linked agarose gel according to above.**

Ion exchange gels according to the descriptions for synthesis above were packed in a HR 10/2 column (Amersham Pharmacia Biotech AB, Uppsala, Sweden) to a gel height of 2-2.5 cm at back pressure of about 1 bar.

The chromatographic evaluation was performed under the conditions and samples indicated below in a FPLC system from Amersham Pharmacia Biotech AB, Uppsala, Sweden.

| AtpH 8 | |
|---|---|
| Sample | Ribonuclease A 1 mg/ml, Chymotrypsinogen A 1 mg/ml, Cytochrome C 1 mg/ml, Lysozyme 1 mg/ml, |
| Loop volume | 100 µl |
| Buffer A | HEPES-NaOH 20 mM, pH 8.0 |
| Buffer B | HEPES-NaOH 20 mM, NaCl 0.5 or 1.0 M, pH 8.0 |
| Flow | 0.5 ml/min |
| Gradient slope | 0.05 M/ml |
| UV detector | 280 nm 0.05 AU |

Conductometer Max = 100 mS/cm

| At pH 4 | |
|---|---|
| Sample | Wheat-germ lectin (3 peaks) 1 mg/ml and β-lactoglobulin 1 mg/ml, |
| Loop volume | 100 µl |
| Buffer A | Formic acid-NaOH 20 mM, pH 8.0 |
| Buffer B | Formic acid-NaOH 20 mM, LiCl 0.75 or 1.0 M, pH 8.0 |
| Flow | 0.5 ml/min |
| Gradient slope | 0.075 M/ml |
| UV detector | 280 nm 0.05 AU |

Conductometer Max = 100 mS/cm

**Results:**

**Figure 1** depicts the elution ionic strength in mS/cm at pH 8.0 for prepared ion exchangers for the studied model proteins. Ion exchangers, which under existing conditions exhibit a ligand with a negative net charge and an available functional group according to the invention have a different ability to separate the studied model proteins from each other by cation exchange chromatography. One difference is a significant increased dynamics, i.e. the elution ionic strength values for the sample substances included in the separation extend over a wider ionic strength interval. Another difference is that higher or considerably very much higher elution ionic strengths are required to elute all the used sample substances. These effects appear more or less simultaneously.

**Figure 2** shows results from several chromatography runs at pH 4. At this low pH value the ligands of the example have no or reduced negative net charge. The TAPS-ligand is an example of a ligand where the net charge is zero and to which none of the sample substances adhere.

The sulphanilic acid group has a slightly positive net charge at pH 4. The amino group is completely charged (pKa just above 7) and the sulphonate group (pKa of approximately 3) starts to uncharge.

The result for the partially uncharged sulphonate group in the sulphanilic acid-ligand illustrates that the interaction is complex and that the result maybe be difficult to interpret based on mechanistic terms. The carboxylic group of the 4-hydroxybenzoic acid-ligand is also uncharged at pH 4, while the hydroquinone sulphonate-ligand is charged at pH 4 and gives strong binding. Transforming a hydroxy group of the hydroquinone sulphate ligand to an ether group will dramatically change the binding capacity (for instance by (a) allylation and subsequent transformation of the double bound to a sulphonate group or (b) alkylation with BPR-butane (1,4-diglycidylbutylether)). This kind of modifications means that the aromatic group becomes sterically shielded while at the same time the phenolic hydroxyl becomes part of an ether bond. The result is that the sample substances will have an elution behaviour that is very much alike their behaviour on the reference ion exchanger (sulphonate-ligand) .

**Claims**

1. A process for separation of positively charged compounds, primarily biomolecules and particularly amphoteric ones such as proteins, from a solution, comprising the steps of contacting the solution with a cation exchanger under conditions permitting binding of one or more of the positively charged compounds to the cation exchanger, and, if desired, eluting bound compounds, **characterised in that**

(i) the ionic strength in the solution during binding is > 15 mS/cm, and
the ionic strength in the solution during elution exceeds the ionic strength applied when binding, and
(ii) the cation exchanger has the formula (I)

$$M\text{-}A\text{-}X\text{-}Y(\text{-}Z)_n \qquad\qquad [I]$$

in which formula

a) M is a hydrophilic matrix;
b) A is a spacer, and
c) $X\text{-}Y(\text{-}Z)_n$ is a cation exchanging ligand; wherein
d) X is -O-, -S($R_1$)- or -N($R_1$)($R_2$)-, wherein $R_1$ and $R_2$ are selected among H, a free electron pair, A-X-Y $(\text{-}Z)_n$, $Y(\text{-}Z)_n$ and straight or branched aliphatic, preferably saturated, $C_1$-$C_6$ groups, which for $C_{2\text{-}6}$ alkyl may have 1-4 of its hydrogen atoms replaced by OH groups in which a hydrogen may be replaced by a lower alkyl, with the proviso that only one of $R_1$ and $R_2$ can be a free electron pair;
e) Y may be:

1) a 5- or 6-membered cyclic structure containing double bonds, preferably an aromatic group, or
2) an alicyclic $C_5$-$C_s$ group or an aliphatic, straight or branched, preferably saturated, $C_1$-$C_8$ group with the possibility that the chain joining X with Z may be interrupted by one or two ether oxygen or thioether sulphur atoms and with the proviso that X is not -O- or -S-; and

f) Z is a cation-exchanging group; and **in that** the binding between the cation exchanger and the positively charged compound(s) is allowed to proceed at a pH value within the range of 2-14 at which ligands -X-Y $(\text{-}Z)_n$ have a negative net charge.

2. The process of claim 1, **characterised in that**

(a) the cation exchanger provides for binding at a higher ionic strength than the elution ionic strength required for eluting said one or more compounds at the same pH value from the reference ion exchanger defined in claim 1, preferably 25% higher, more preferably at least 40% higher and most preferably at least 100% higher, and
(b) binding is allowed to occur at such a higher ionic strength.

3. The process of any one of claims 1-2, **characterised in that** the ionic strength in the solution during binding is > 20 mS/cm, preferably > 30 mS/cm or > 40 mS/cm.

4. The process of any one of the claims 1-3, **characterised in that** the elution is carried out under conditions neutralising the binding of the compound(s) to the ligand.

5. The process of any one of the claims 1-4, **characterised in that** the elution is carried out at a pH, which is separate from the pH at which binding has been performed.

6. The process of any one of the claims 1-5, **characterised in that** it can be used at a higher maximum elution ionic strength in the pH interval 2-14 for one or more proteins selected among ribonuclease, chymotrypsinogen A, cytochrome C, lysozyme, wheat-germ lectin and (3-lactoglobulin, than the corresponding elution ionic strength measured at the same conditions on a reference ion exchanger on which the ion exchanging group (Z) is sulphonate ($\text{-}SO_3\text{-}$) and the base matrix, spacer and the degree of substitution is the same as in the cation exchanger of formula I but the groups X and Y are absent.

7. The process of any one of the claims 1-6, **characterised in that** the elution is carried out by applying a change in ionic strength covering an interval which is 20%, preferably at least 40%, broader than the corresponding interval for eluting the compound on the reference ion exchanger defined in claim 6.

8. The process of any one of claims 1-7, **characterised in that** the elution is carried out by applying a change in ionic strength covering an interval, which is at least 50%, preferably at least 75%, and even more preferably at least 100%, greater than the corresponding interval for the reference ion exchanger defined in claim 1 and measured at, in other respects, the same conditions.

9. The process of claim 1-8, **characterised in that** the ionic strength interval used for elution of at least one of the compounds the compound(s) is > 20 mS/cm or > 50 mS/cm.

10. The process of any one of claims 1-9, **characterised in that** 1-4 OR' groups are present in any one of the groups $R_1$ and $R_2$ with R' being selected among the same groups as $R_1$ and $R_2$ and preferably is H.

11. The process of any one of claims 1-10, **characterised in that** X is $-N(R_1)(R_2)-$.

12. The process of any one of claims 1-11, **characterised in that** $X=-N(R_1)(R_2)-$ and that there is/are 1-4, such as 1-3, OR' groups, at a distance of 2 or 3 carbon atoms from the nitrogen atom in $-N(R_1)(R_2)-$where R' is selected among the same groups as $R_1$ and $R_2$.

13. The process of any one of claims 11-12, **characterised in that** Y and/or A provide a hydroxy group at a distance of two or three atoms from the nitrogen atom in $-N(R_1)(R_2)-$.

14. The process of any one of claims 1-13, **characterised in that** in Y, R', $R_1$ and $R_2$ only one atom selected among sulphur, oxygen and nitrogen binds to each carbon atom.

15. The process of any of the claims 1-14, **characterised in that** Z is selected among carboxylate, sulphonate, phosphonate, phosphate including charged protonated forms thereof.

16. The process of any one of the claims 1-8 and 14- 15, **characterised in that** X is -O- or $-S(R_1)-$.

17. The process of any of the claims 1-16, **characterised in that** Y is an aromatic group, particularly a benzene ring.

18. The process of any of the claims 1-17, **characterised in that** the ligand-X-Y(-Z)$_n$ is derived from hydroxybenzoic acid and/or sulphosalicylic acid, particularly para forms and particularly via coupling of a ring bound OH group to the spacer.

19. The process of any of the claims 1-18, **characterised in that** the ligand - X-Y(-Z)$_n$ is derived from hydroquinone sulphonate, particularly via coupling of a ring bound OH group to the spacer, particularly the OH group, which is meta or ortho to $-SO_{3-}$ ($Z_1 = -SO_3-$ and $Z_2 = -OH/-O-$; and n = 2).

20. The process of any of the claims 1-16, **characterised in that** Y is an aliphatic group selected among $C_2-C_6$ groups, preferably $C_2-C_4$ groups.

21. The process of claim 20, **characterised in that** X is $-N(R_1)(R_2)-$, $R_1$ is a free electron pair or hydrogen, $R_2$ is tris (hydroxymethyl)methyl, Y is $-CH_2CH_2CH_2-$ or $-CH_2CHOHCH_2-$, Z is $SO_{3-}$ and n is 1.

22. A cation exchanger suitable for use in a process as defined in any one of claims 1-21, **characterised in that** it is defined by formula (I) below

$$M-A-X-Y(-Z)_n \qquad\qquad (I)$$

in which formula

    a) M is a hydrophilic matrix;
    b) A is a spacer, and
    c) X-Y(-Z)$_n$ is a cation exchanging ligand; wherein

d) X is -O-, -S($R_1$)- or -N($R_1$)($R_2$)-, wherein $R_1$ and $R_2$ are selected among H, a free electron pair, A-X-Y(-Z)$_n$, Y(-Z)$_n$ and straight or branched aliphatic, preferably saturated, $C_1$-$C_6$ groups, which for $C_{2-6}$ allyl may have 1-4 of its hydrogen atoms replaced by OH groups in which a hydrogen may be replaced by a lower alkyl, with the proviso that only one of $R_1$ and $R_2$ can be a free electron pair;

e) Y may be:

1) a 5- or 6-membered cyclic structure containing double bonds, preferably an aromatic group, or
2) an alicyclic $C_5$-$C_6$ group or an aliphatic, straight or branched, preferably saturated, $C_1$-$C_8$ group with the possibility that the chain joining X with Z may be interrupted by one or two ether oxygen or thioether sulphur atoms and with the proviso that X is not -O- or -S-; and

f) Z is a cation-exchanging group.

23. The cation exchanger of claim 22, wherein X of formula (I) is -N ($R_1$)($R_2$)-.

24. The cation exchanger of claim 22 or 23, **characterised in that** X = -N($R_1$)($R_2$)- and that there is/are 1-4, such as 1-3, OR' groups, at a distance of 2 or 3 carbon atoms from the nitrogen atom in -N($R_1$)($R_2$)-where R' is selected among the same groups as $R_1$ and $R_2$.

25. The cation exchanger of any one of claims 22-24, **characterised in that** Y and/or A provide a hydroxy group at a distance of two or three atoms from the nitrogen atom in -N($R_1$)($R_2$)-.

26. The cation exchanger of any one of claims 22-25, **characterised in that** in Y, R', $R_1$ and $R_2$ only one atom selected among sulphur, oxygen and nitrogen binds to each carbon atom.

27. The cation exchanger of any of the claims 22-26, **characterised in that** Z is selected among carboxylate, sulphonate, phosphonate, phosphate including charged protonated forms thereof.

28. The cation exchanger of claim 22, **characterised in that** X is -O-or -S($R_1$)-.

29. The ration exchanger of claim 22 or 28, **characterised in that** Y is an aromatic group, particularly a benzene ring.

30. The cation exchanger of any of the claims 22-29, **characterised in that** the ligand -X-Y(-Z)$_n$ is derived from hydroxybenzoic acid and/or sulphosalicylic acid, particularly para forms and particularly via coupling of a ring bound OH group to the spacer.

31. The ration exchanger of any of the claims 22-29, **characterised in that** the ligand -X-Y(-Z)$_n$ is derived from hydroquinone sulphonate, particularly via coupling of a ring bound OH group to the spacer, particularly the OH group, which is meta or ortho to -$SO_3$- ($Z_1$ = -$SO_3$-and $Z_2$ = -OH/-$O^-$; and n = 2).

32. The cation exchanger of any of the claims 22-16, **characterised in that** Y is an aliphatic group selected among $C_2$-$C_6$ groups, preferably $C_2$-$C_4$ groups.

33. The cation exchanger of claim 22 or 23, **characterised in that** X is-N($R_1$)($R_2$)-, $R_1$ is a free electron pair or hydrogen, $R_2$ is tris(hydroxymethyl)methyl, Y is -$CH_2CH_2CH_2$- or -$CH_2CHOHCH_2$-, Z is $SO_3$- and n is 1.

**Patentansprüche**

1. Verfahren zum Abtrennen positiv geladener Verbindungen, primär von Biomolekülen und insbesondere amphoteren solcher, wie Proteine, aus einer Lösung, umfassend die Schritte des Kontaktierens der Lösung mit einem Kationenaustauscher unter Bedingungen, welche das Binden einer oder mehrerer der positiv geladenen Verbindungen an den Kationenaustauscher erlauben, und, falls erwünscht, des Eluierens gebundener Verbindungen, **dadurch gekennzeichnet, dass**

(i) die Ionenstärke in der Lösung während des Bindens >15 mS/cm ist, und
die Ionenstärke in der Lösung während des Eluierens die während dem Binden angewandte Ionenstärke überschreitet, und

(ii) der Kationenaustauscher die Formel (I) besitzt

$$M\text{-}A\text{-}X\text{-}Y(\text{-}Z)_n \tag{I}$$

in welcher Formel

a) M eine hydrophile Matrix ist;

b) A ein Spacer ist, und

c) $X\text{-}Y(\text{-}Z)_n$ ein kationenaustauschender Ligand ist; worin

d) X -O-, -S($R_1$)- oder -N($R_1$)($R_2$)- ist, worin $R_1$ und $R_2$ gewählt sind aus H, einem freien E1ektronenpaar, $A\text{-}X\text{-}Y(\text{-}Z)_n$, $Y(\text{-}Z)_n$ und geraden oder verzweigten aliphatischen, vorzugsweise gesättigten $C_1\text{-}C_6$-Gruppen, wobei für $C_{2\text{-}6}$-Alkyl 1-4 dessen Wasserstoffatome ersetzt sein können durch OH-Gruppen, worin ein Wasserstoff durch ein Niederalkyl ersetzt sein kann, mit der Maßgabe, dass nur eines von $R_1$ und $R_2$ ein freies Elektronenpaar sein kann;

e) Y sein kann

1 ) eine 5- oder 6-gliedrige cyclische Struktur enthaltend Doppelbindungen, vorzugsweise eine aromatische Gruppe, oder

2) eine alicyclische $C_5\text{-}C_6$-Gruppe oder eine aliphatische, gerade oder verzweigte, vorzugsweise gesättigte $C_1\text{-}C_8$-Gruppe mit der Möglichkeit, dass die X mit Z verbindende Kette durch einen oder zwei Ethersauerstoffatome oder Thioetherschwefelatome unterbrochen sein kann, und mit der Maßgabe, dass X nicht -O-oder -S- ist; und

f) Z eine kationenaustauschende Gruppe ist; und dass die Bindung zwischen dem Kationenaustauscher und der positiv geladenen Verbindung(en) bei einem pH-Wert innerhalb des Bereichs von 2-14, bei welchem die Liganden $-X\text{-}Y(\text{-}Z)_n$ eine negative Nettoladung besitzen, voranschreiten gelassen wird.

2. Verfahren nach Anspruch 1, **dadurch gekennzeichnet, dass**

(a) der Kationenaustauscher das Binden bei einer höheren lonenstärke vorsieht als die Elutions-Ionenstärke, welche erforderlich ist zum Eluieren der einen oder der mehreren Verbindungen beim gleichen pH-Wert von dem in Anspruch 1 definierten Referenz-Ionenaustauscher, vorzugsweise 25% höher, weiter vorzugsweise mindestens 40% höher und am meisten bevorzugt mindestens 100% höher, und

(b) das Binden bei einer solchen höheren Ionenstärke zugelassen wird.

3. Verfahren nach mindestens einem der Ansprüche 1-2, **dadurch gekennzeichnet, dass** die Ionenstärke in der Lösung während dem Binden >20 mS/cm, vorzugsweise >30 mS/cm oder >40 mS/cm ist.

4. Verfahren nach mindestens einem der Ansprüche 1-3, **dadurch gekennzeichnet, dass** die Elution unter Bedingungen durchgeführt wird. welche das Binden der Verbindung(en) an den Liganden neutralisieren.

5. Verfahren nach mindestens einem der Ansprüche 1-4, **dadurch gekennzeichnet, dass** die Elution bei einem pH durchgeführt wird, welcher getrennt ist von dem pH, bei welchem das Binden durchgeführt worden ist.

6. Verfahren nach mindestens einem der Ansprüche 1-5, **dadurch gekennzeichnet, dass** es bei einer höheren maximalen Elutions-Ionenstärke im pH-Intervall von 2-14 verwendet werden kann für ein oder mehrere Proteine, gewählt aus Ribonuclease, Chymotrypsinogen A, Cytochrom C, Lyszozym, Weizenkelm-Lectin und β-Lactoglobulln, als die korrespondierende Elutions-Ionenstärke, gemessen bei gleichen Bedingungen auf einem Referenz-Ionenaustauscher, auf dem die ionenaustauschende Gruppe (Z) Sulfonat ($-SO_3^-$) ist und die Grundmatrix, Spacer und der Substitutionsgrad der gleiche sind wie beim Kationenaustauscher der Formel I, worin jedoch die Gruppen X und Y fehlen.

7. Verfahren nach mindestens einem der Ansprüche 1-6, **dadurch gekennzeichnet, dass** die Elution durchgeführt wird durch Anwenden einer Änderung in der Ionenstärke, umfassend ein Intervall, das 20%, vorzugsweise mindestens 40% breiter ist als das korrespondierende Intervall für die Elution der Verbindung auf dem Referenz-Ionenaustauscher wie in Anspruch 6 definiert.

**8.** Verfahren nach mindestens einem der Ansprüche 1-7, **dadurch gekennzeichnet, dass** die Elution durchgeführt wird durch Anwenden einer Änderung in der Ionenstärke, umfassend ein Intervall, das mindestens 50%, vorzugsweise mindestens 75% und noch weiter vorzugsweise mindestens 100% größer ist als das korrespondierende Intervall für den Referenz-Ionenaustauscher, wie in Anspruch 1 definiert, und gemessen, hinsichtlich anderen Belangen, unter den gleichen Bedingungen.

**9.** Verfahren nach den Ansprüchen 1-8, **dadurch gekennzeichnet, dass** das für die Elution mindestens einer der Verbindungen der Verbindung(en) verwendete Ionenstärken-Intervall > 20 mS/cm oder >50 mS/cm ist.

**10.** Verfahren nach mindestens einem der Ansprüche 1-9, **dadurch gekennzeichnet, dass** 1-4 OR'-Gruppen in jeder der Gruppen $R_1$ und $R_2$ vorliegen, wobei $R'$ aus den gleichen Gruppen wie $R_1$ und $R_2$ gewählt wird, und vorzugswelse H ist.

**11.** Verfahren nach mindestens einem der Ansprüche 1-10, **dadurch gekennzeichnet, dass** X -N($R_1$)($R_2$)- ist.

**12.** Verfahren nach mindestens einem der Ansprüche 1-11, **dadurch gekennzeichnet, dass** X = -N($R_1$)($R_2$)- ist und dass 1-4, wie 1-3, OR'-Gruppen vorliegen, in einem Abstand von 2 oder 3 Kohlenstoffatomen vom Stickstoffatom in -N($R_1$)($R_2$)-, worin R' unter den gleichen Gruppen wie $R_1$ und $R_2$ gewählt ist.

**13.** Verfahren nach mindestens einem der Ansprüche 11-12, **dadurch gekennzeichnet, dass** Y und/oder A eine Hydroxygruppe vorsehen in einem Abstand von zwei oder drei Atomen vom Stickstoffatom in -N($R_1$)($R_2$)-.

**14.** Verfahren nach mindestens einem der Ansprüche 1-13, **dadurch gekennzeichnet, dass** in Y, R', $R_1$ und $R_2$ nur ein Atom, gewählt aus Schwefel. Sauerstoff und Stickstoff, mit jedem Kohlenstoffatom gebunden ist.

**15.** Verfahren nach mindestens einem der Ansprüche 1-14, **dadurch gekennzeichnet, dass** Z aus Carboxylat, Sulfonat, Phosphonat, Phosphat, einschließlich geladenen protonierten Formen hiervon, gewählt ist.

**16.** Verfahren nach mindestens einem der Ansprüche 1-8 und 14-15, **dadurch gekennzeichnet, dass** X -O- oder -S($R_1$)- ist.

**17.** Verfahren nach mindestens einem der Ansprüche 1-16, **dadurch gekennzeichnet, dass** Y eine aromatische Gruppe ist, insbesondere ein Benzolring.

**18.** Verfahren nach mindestens einem der Ansprüche 1-17, **dadurch gekennzeichnet, dass** der Ligand -X-Y(-Z)$_n$ abgeleitet ist aus Hydroxybenzoesäure und/oder Sulfosalicylsäure, insbesondere para-Formen und insbesondere durch Kupplung einer ringgebundenen OH-Gruppe mit dem Spacer.

**19.** Verfahren nach mindestens einem der Ansprüche 1-18, **dadurch gekennzeichnet, dass** der Ligand -X-Y(-Z)$_n$ abgeleitet ist aus Hydrochinonsulfonat. insbesondere durch Kupplung einer ringgebundenen OH-Gruppe mit dem Spacer, insbesondere der OH-Gruppe, welche meta oder ortho zuSO$_3$- ($Z_1$ = -SO$_3$- und $Z_2$ = -OH/-O$^-$; und n = 2) ist.

**20.** Verfahren nach mindestens einem der Ansprüche 1-16, **dadurch gekennzeichnet, dass** Y eine aliphatische Gruppe ist, gewählt aus $C_2$-$C_6$-Grup-pen, vorzugsweise $C_2$-$C_4$-Gruppen.

**21.** Verfahren nach Anspruch 20, **dadurch gekennzeichnet, dass** X -N($R_1$)($R_2$)-ist. $R_1$ ein freies Elektronenpaar oder Wasserstoff ist, $R_2$ Tris(hydroxyme-thyl)methyl ist, Y -CH$_2$CH$_2$CH$_2$- oder CH$_2$CHOHCH$_2$- ist; Z SO$_3$- ist und n 1 ist.

**22.** Kationenaustauscher, welcher geeignet ist zur Verwendung in einem Verfahren gemäß mindestens einem der Ansprüche 1-21, **dadurch gekennzeichnet, dass** er definiert ist durch die folgende Formel (I)

$$M\text{-}A\text{-}X\text{-}Y(\text{-}Z)_n \qquad\qquad (I)$$

in welcher Formel

    a) M eine hydrophile Matrix ist;

b) A ein Spacer ist, und

c) X-Y(-Z)$_n$ ein kationenaustauschender Ligand ist: worin

d) X -O-, -S(R$_1$)- oder -N(R1)(R$_2$)- ist, worin R$_1$ und R$_2$ gewählt sind aus H, einem freien Elektronenpaar, A-X-Y (-Z)$_n$. Y(-Z)$_n$ und geraden oder verzweigten aliphatischen, vorzugsweise gesättigten C$_1$-C$_6$-Gruppen, wobei für C$_{2-6}$-Alkyl 1-4 dessen Wasserstoffatome ersetzt sein können durch OH-Gruppen, worin ein Wasserstoff durch ein Niederalkyl ersetzt sein kann, mit der Maßgabe, dass nur eines von R$_1$ und R$_2$ ein freies Elektronenpaar sein kann;

e) Y sein kann

1) eine 5- oder 6-gliedrige cyclische Struktur enthaltend Doppelbindungen, vorzugsweise eine aromatische Gruppe, oder

2) eine alicyclische C$_5$-C$_6$-Gruppe oder eine aliphatische, gerade oder verzweigte, vorzugsweise gesättigte C$_1$-C$_8$-Gruppe mit der Möglichkeit, dass die X mit Z verbindende Kette durch einen oder zwei Ethersauerstoffatome oder Thloetherschwefelatome unterbrochen sein kann, und mit der Maßgabe, dass X nicht -O-oder -S- ist; und

f) Z eine kationenaustauschende Gruppe ist.

23. Kationenaustauscher nach Anspruch 22, wobei X der Formel (I) -N(R$_1$)(R$_2$)-ist.

24. Kationenaustauscher nach Anspruch 22 oder 23, **dadurch gekennzeichnet , dass** X = -N(R$_1$)(R$_2$)- und dass 1-4, wie 1-3, OR'-Gruppen vorliegen, in einem Abstand von 2 oder 3 Kohlenstoffatomen vom Stickstoffatom in-N(R$_1$) (R$_2$)-, worin R' unter den gleichen Gruppen wie R$_1$ und R$_2$ gewählt ist.

25. Kationenaustauscher nach mindestens einem der Ansprüche 22-24, **dadurch gekennzeichnet, dass** Y und/oder A eine Hydroxygruppe vorsehen in einem Abstand v on zwei oder drei Atomen vom Stickstoffatom in - N(R$_1$)(R$_2$)-.

26. Kationenaustauscher nach mindestens einem der Ansprüche 22-25, **dadurch gekennzeichnet, dass** in Y, R', R$_1$ und R$_2$ nur ein Atom, gewählt aus Schwefel. Sauerstoff und Stickstoff, mit jedem Kohlenstoffatom gebunden ist.

27. Kationenaustauscher nach mindestens einem der Ansprüche 22-26, **dadurch gekennzeichnet, dass** Z aus Carboxylat, Sulfonat, Phosphonat, Phosphat, einschlieBlich geladenen protonierten Formen hiervon, gewählt ist.

28. Kationenaustauscher nach Anspruch 22, **dadurch gekennzeichnet, dass** X -O- oder -S(R$_1$)- ist.

29. Kationenaustauscher nach Anspruch 22 oder 28, **dadurch gekennzeichnet dass** Y eine aromatische Gruppe ist, insbesondere ein Benzolring.

30. Kationenaustauscher nach mindestens einem der Ansprüche 22-29, **dadurch gekennzeichnet, dass** der Ligand -X-Y(-Z)$_n$ abgeleitet ist aus Hydroxybenzoesäure und/oder Sulfosalicylsäure, insbesondere para-Formen und insbesondere durch Kupplung einer ringgebundenen OH-Gruppe mit dem Spacer.

31. Kationenaustauscher nach mindestens einem der Ansprüche 22-29, **dadurch gekennzeichnet, dass** der Ligand -X-Y(-Z)$_n$ abgeleitet ist aus Hydrochinonsulfonat, insbesondere durch Kupplung einer ringgebundenen OH-Gruppe mit dem Spacer, insbesondere der OH-Gruppe, welche meta oder ortho zu -SO$_3$- (Z$_1$ = -SO$_3$- und Z$_2$ = -OH/-O$^-$; und n = 2) ist.

32. Kationenaustauscher nach mindestens einem der Ansprüche 22-16, **dadurch gekennzeichnet, dass** Y eine aliphatische Gruppe ist, gewählt aus C$_2$-C$_6$-Gruppen, vorzugsweise C$_2$-C$_4$-Gruppen.

33. Kationenaustauscher nach Anspruch 22 oder 23, **dadurch gekennzeichnet, dass** X -N(R$_1$)(R$_2$)- ist, R$_1$ ein freies Elektronenpaar oder Wasserstoff ist, R$_2$ Tris(hydroxymethyl)methyl ist, Y -CH$_2$CH$_2$CH$_2$- oder CH$_2$CHOHCH$_2$-ist; Z SO$_3$- ist und n 1 ist.

**Revendications**

1. Procédé de séparation de composés chargés positivement, principalement de biomolécules et en particulier celles qui sont amphotères telles que les protéines, à partir d'une solution, comprenant les étapes consistant à mettre la solution en contact avec un échangeur de cations dans des conditions permettent la liaison d'un ou de plusieurs des composés chargés positivement à l'échangeur de cations, et, si désiré, l'elution des composés liés, **caractérisé en ce que**

(i) la force ionique dans la solution pendant la liaison est > 15 mS/cm, et la force ionique dans la solution pendant l'élution dépasse la force ionique appliquée lors de la liaison,
et
(ii) l'échangeur de cations a la formule (I)

$$M\text{-}A\text{-}X\text{-}Y(\text{-}Z)_n \tag{I}$$

formule dans laquelle

a) M est une matrice hydrophile ;
b) A est un espaceur, et
c) $X\text{-}Y(\text{-}Z)_n$ est un ligand d'échange de cations ; dans lequel
d) X est -O-, $-S(R_1)$- ou $-N(R_1)(R_2)$-, dans lequel $R_1$ et $R_2$ sont choisis parmi H, une paire d'électrons libres, $A\text{-}X\text{-}Y(\text{-}Z)_n$, $Y(\text{-}Z)_n$ et des groupes en $C_1$ à $C_6$ aliphatiques linéaires ou ramifiés, de préférence saturés, qui pour un groupé alkyle en $C_2$ à $C_6$ peuvent avoir 1-4 de ses atomes d'hydrogène remplacés par des groupes OH dans lesquels un hydrogène peut être remplacé par un alkyle inférieur, avec la condition que seulement un de $R_1$ et $R_2$ puisse être une paire d'électrons libres ;
e) Y peut être :

1) une structure cyclique à 5 ou 6 chaînons contenant des doubles liaisons, de préférence un groupe aromatique, ou
2) un groupe alicyclique en $C_5$ à $C_6$ ou un groupe aliphatique, linéaire ou ramifié, de préférence saturé en $C_1$ à $C_8$ avec la possibilité que la chaîne joignant X avec Z puisse être interrompue par un ou deux atomes d'oxygène éther ou de soufre thioéther et avec la condition que X ne soit pas -O- ou -S- ; et

f) Z est un groupe d'échange de cations ; et **en ce que** la liaison entre l'échangeur de cations et le ou les composés chargés positivement puisse s'effectuer à une valeur de pH à l'intérieur de la gamme 2-14 dans laquelle les ligands -X-Y(-Z), ont une charge nette négative.

2. Procédé selon la revendication 1, **caractérisé en ce que**

(a) l'échangeur de cation fournit une liaison à une force ionique plus élevée que la force ionique d'élution nécessaire pour éluer lesdits un ou plusieurs composés à la même valeur de pH de l'échangeur ionique de référence défini à la revendication 1, de préférence 25 % supérieure, de manière plus préférée au moins 40 % supérieure et de la manière la plus préférée au moins 100 % supérieure, et
(b) on laisse se produire la liaison à une telle force ionique plus élevée.

3. Procédé selon l'une quelconque des revendications 1-2, **caractérisé en ce que** la force ionique dans la solution pendant la liaison est > 20 mS/cm, de préférence > 30 mS/cm ou > 40 mS/cm.

4. Procédé selon l'une quelconque des revendications 1-3, **caractérisé en ce que** l'élution est réalisée dans des conditions neutralisant la liaison du ou des composés au ligand.

5. Procédé selon l'une quelconque des revendications 1-4, **caractérisé en ce que** l'élution est réalisée à un pH, qui est différent du pH auquel la liaison a été réalisée.

6. Procédé selon l'une quelconque des revendications 1-5, caractérisé en qu'il peut être utilisé à une force ionique d'élution maximum plus élevée dans l'intervalle de pH 2-14 pour une ou plusieurs protéines choisies parmi la ribonucléase, le chymotrypsinogène A, le cytochrome C, le lysozyme, la lectine de germe de froment et la β-lactoglobuline, que la force ionique d'élution correspondante mesurée dans les mêmes conditions sur un échangeur d'ions de référence sur lequel le groupe d'échange d'ions (Z) est un sulfonate ($-SO_3^-$) et la matrice de base, l'espaceur et le degré de substitution sont identiques à ceux de l'échangeur de cations de formule I mais les groupes X et Y sont absents.

7. Procédé selon l'une quelconque des revendications 1-6, **caractérisé en ce que** l'élution est réalisée en appliquant un changement dans la force ionique en couvrant un intervalle qui est de 20 %, de préférence d'au moins 40 % plus large que l'intervalle correspondant pour éluer le composé sur l'échangeur d'ions de référence défini à la revendication 6.

8. Procédé selon l'une quelconque des revendications 1-7, **caractérisé en ce que** l'élution est réalisée en appliquant un changement dans la force ionique en couvrant un intervalle qui est d'au moins 50 %, de préférence d'au moins 75 %, et de manière encore plus préférée d'au moins 100 % plus large que l'intervalle correspondant pour éluer le composé sur l'échangeur d'ions de référence défini à la revendication 1 et mesuré, sous d'autres aspects, dans des conditions identiques.

9. Procédé selon les revendications 1-8, **caractérisé en ce que** l'intervalle de force ionique utilisé pour éluer au moins un des composés est > 20 mS/cm ou > 50 mS/cm.

10. Procédé selon l'une quelconque des revendications 1-9, **caractérisé en ce que** 1-4 groupes OR' sont présents dans l'un quelconque des groupes $R_1$ et $R_2$ avec R' étant choisi dans les mêmes groupes que $R_1$ et $R_2$ et est de préférence H.

11. Procédé selon l'une quelconque des revendications 1-10, **caractérisé en ce que** X est $N(R_1)(R_2)$-.

12. Procédé selon l'une quelconque des revendications 1-11, **caractérisé en ce que** X = $-N(R_1)(R_2)$- et **en ce qu'**il y a 1-4, tels que 1-3, groupes OR', à une distance de 2 ou 3 atomes de carbone de l'atome d'azote dans $-N(R_1)(R_2)$- où R' est choisi dans les mêmes groupes que $R_1$ et $R_2$.

13. Procédé selon l'une quelconque des revendications 11-12, **caractérisé en ce que** Y et/ou A fournit un groupe hydroxy à une distance de deux ou trois atomes de l'atome d'azote dans $-N(R_1)(R_2)$-.

14. Procédé selon l'une quelconque des revendications 1-13, **caractérisé en ce que** dans Y, R', $R_1$ et $R_2$ seulement un atome choisi parmi le soufre, l'oxygène et l'azote est lié à chaque atome de carbone.

15. Procédé selon l'une quelconque des revendications 11-14, **caractérisé en ce que** Z est choisi parmi un carboxylate, sulfonate, phosphonate, phosphate y compris leurs formes protonées chargées.

16. Procédé selon l'une quelconque des revendications 1-8 et 14-15, **caractérisé en ce que** X est -O- ou $-S(R_1)$-.

17. Procédé selon l'une quelconque des revendications 1-16, **caractérisé en ce que** Y et un groupe aromatique, en particulier un cycle benzène.

18. Procédé selon l'une quelconque des revendications 1-17, **caractérisé en ce que** le ligand $-X-Y(-Z)_n$ est dérivé d'acide hydroxybenzoïque et/ou d'acide sulfosalicylique, en particulier les formes para et en particulier via un couplage d'un groupe OH lié par un cycle à l'espaceur.

19. Procédé selon l'une quelconque des revendications 1-18, **caractérisé en ce que** le ligand $-X-Y(-Z)_n$ est dérivé de sulfonate d'hydroquinone, en particulier via un couplage d'un groupe OH lié par un cycle à l'espaceur, en particulier le groupe OH, qui est en position méta ou ortho par rapport à $-SO_3^-$ ($Z_1 = -SO_3^-$ et $Z_2 = -OH/-O^-$ ; et n=2).

20. Procédé selon l'une quelconque des revendications 1-16, **caractérisé en ce que** Y est un groupe aliphatique choisi parmi des groupes en $C_2$-$C_6$, de préférence des groupes en $C_2$-$C_4$.

21. Procédé selon la revendication 20, **caractérisé en ce que** X est $-N(R_1)(R_2)$-, $R_1$ est une paire d'électrons libres ou un atome d'hydrogène, $R_2$ est tris(hydroxyméthyl)méthyle, Y est $-CH_2CH_2CH_2-$ ou $-CH_2CH_2OHCH_2-$, Z est $SO_3^-$ et n = 1.

22. Echangeur de cations approprié à l'utilisation dans un procédé tel que défini dans l'une quelconque des revendications 1-21, **caractérisé en ce qu'**il est défini par la formule (I) ci-dessous

$$M\text{-}A\text{-}X\text{-}Y(\text{-}Z)_n \qquad\qquad (I)$$

formule dans laquelle

a) M est une matrice hydrophile ;
b) A est un espaceur, et
c) X-Y(-Z)$_n$ est un ligand d'échange de cations ; dans lequel
d) X est -O-, -S(R$_1$)- ou N(R$_1$)(R$_2$)-, dans lequel R$_1$ et R$_2$ sont choisis parmi H, une paire d'électrons libres, A-X-Y(-Z)$_n$, Y(-Z)$_n$ et des groupes en C$_1$ à C$_6$ aliphatiques linéaires ou ramifiés, de préférence saturés, qui pour un groupe alkyle en C$_2$ à C$_6$ peut avoir 1-4 de ses atomes d'hydrogène remplacés par des groupes OH dans lesquels un hydrogène peut être remplacé par un alkyle inférieur, avec la condition que seulement un de R$_1$ et R$_2$ puisse être une paire d'électrons libres ;
e) Y peut être :

1) une structure cyclique à 5 ou 6 chaînons contenant des doubles liaisons, de préférence un groupe aromatique, ou
2) un groupe alicyclique en C$_5$ à C$_6$ ou un groupe aliphatique, linéaire ou ramifié, de préférence saturé en C$_1$ à C$_8$ avec la possibilité que la chaîne joignant X avec Z puisse être interrompue par un ou deux atomes d'oxygène éther ou de soufre thioéther et avec la condition que X ne soit pas -O- ou -S- ; et

f) Z est un groupe d'échange de cations.

**23.** Echangeur de cations selon la revendication 22, dans lequel X de formule (I) est N(R$_1$)(R$_2$)-.

**24.** Echangeur de cations selon la revendication 22 ou 23, **caractérisé en ce que** X = -N(R$_1$)(R$_2$)- et **en ce qu'**il y a 1-4, tels que 1-3, groupes OR', à une distance de 2 ou 3 atomes de carbone de l'atome d'azote dans -N(R$_1$)(R$_2$)- où R' est choisi dans les mêmes groupes que R$_1$ et R$_2$.

**25.** Echangeur de cations selon l'une quelconque des revendications 22-24, **caractérisé en ce que** Y et/ou A fournit un groupe hydroxy à une distance de deux ou trois atomes de l'atome d'azote dans -N(R$_1$)(R$_2$)-.

**26.** Echangeur de cations selon l'une quelconque des revendications 22-25, **caractérisé en ce que** dans Y, R', R$_1$ et R$_2$ seulement un atome choisi parmi le soufre, l'oxygène et l'azote est lié à chaque atome de carbone.

**27.** Echangeur de cations selon l'une quelconque des revendications 22-26, **caractérisé en ce que** Z est choisi parmi un carboxylate, sulfonate, phosphonate, phosphate y compris leurs formes protonées chargées.

**28.** Echangeur de cations selon la revendication 22, **caractérisé en ce que** X est -O- ou -S(R$_1$)-.

**29.** Echangeur de cations selon la revendication 22 ou 28, **caractérisé en ce que** Y et un groupe aromatique, en particulier un cycle benzène.

**30.** Echangeur de cations selon l'une quelconque des revendications 22-29, **caractérisé en ce que** le ligand -X-Y(-Z)$_n$ est dérivé d'acide hydroxybenzoïque et/ou d'acide sulfosalicylique, en particulier les formes para et en particulier via un couplage d'un groupe OH lié par un cycle à l'espaceur.

**31.** Echangeur de cations selon l'une quelconque des revendications 22-29, **caractérisé en ce que** le ligand -X-Y(-Z)$_n$ est dérivé de sulfonate d'hydroquinone, en particulier via un couplage d'un groupe OH lié par un cycle à l'espaceur, en particulier le groupe OH, qui est en position méta ou ortho par rapport à -SO$_3^-$ (Z$_1$ = -SO$_3^-$ et Z$_2$ = -OH/-O$^-$ ; et n = 2).

**32.** Echangeur de cations selon l'une quelconque des revendications 22-16, **caractérisé en ce que** Y est groupe aliphatique choisi parmi des groupes en C$_2$-C$_6$, de préférence des groupes en C$_2$-C$_4$.

**33.** Echangeur de cations selon la revendication 22 ou 23, **caractérisé en ce que** X est -N(R$_1$)(R$_2$)-, R$_1$ est une paire d'électrons libres ou un atome d'hydrogène, R$_2$ est tris(hydroxyméthyl)méthyle, Y est -CH$_2$CH$_2$CH$_2$- ou

-CH$_2$CH$_2$OHCH$_2$-, Z est SO$_3^-$ et n = 1.

Figure 1. Comparison of Cation Ligands at pH 8,0

EP 1 094 899 B1

Figure 2. Comparison of Cation Ligands at pH 4,0